(19) Europäisches Patentamt European Patent Office Office européen des brevets

(11) **EP 4 679 720 A1**

(12) **EUROPEAN PATENT APPLICATION**
published in accordance with Art. 153(4) EPC

(43) Date of publication:
**14.01.2026  Bulletin 2026/03**

(21) Application number: **24777781.6**

(22) Date of filing: **18.03.2024**

(51) International Patent Classification (IPC):
**H04B 1/40** (2015.01)    **H04B 7/0413** (2017.01)

(52) Cooperative Patent Classification (CPC):
**H04B 1/40; H04B 7/0413; H04B 7/06; H04B 7/08**

(86) International application number:
**PCT/CN2024/082243**

(87) International publication number:
**WO 2024/198992 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.03.2023  CN 202310377648**

(71) Applicant: **Huawei Technologies Co., Ltd.
Shenzhen, Guangdong 518129 (CN)**

(72) Inventors:
• **YANG, Bo
  Shenzhen, Guangdong 518129 (CN)**

• **CHEN, Kejin
  Shenzhen, Guangdong 518129 (CN)**
• **JIANG, Zhongpo
  Shenzhen, Guangdong 518129 (CN)**
• **CAO, Ping
  Shenzhen, Guangdong 518129 (CN)**
• **SU, Pan
  Shenzhen, Guangdong 518129 (CN)**

(74) Representative: **Gill Jennings & Every LLP
The Broadgate Tower
20 Primrose Street
London EC2A 2ES (GB)**

(54) **RADIO FREQUENCY SYSTEM AND ELECTRONIC DEVICE**

(57)    Embodiments of this application disclose a radio frequency system and an electronic device, and relate to the field of communication technologies, to resolve the following problem in conventional technologies that communication performance of each user equipment deteriorates when a hybrid beamforming technology is used to cover a plurality of user equipments. Specifically, the radio frequency system including a power division circuit and N paths is provided, where N is a positive integer greater than or equal to 2. The power division circuit is configured to receive M radio frequency signals, and divide each of the M radio frequency signals into N original radio frequency sub-signals, where M is a positive integer greater than or equal to 2. Each path is configured to receive M original radio frequency sub-signals, where the M original radio frequency sub-signals include one of the N original radio frequency sub-signals into which each radio frequency signal is divided. In each path, the M amplification circuits are configured to amplify power of the M original radio frequency sub-signals to generate M amplified radio frequency sub-signals, and the antenna is configured to generate and send M radio signals based on the M amplified radio frequency sub-signals.

FIG. 5

## Description

This application claims priority to Chinese Patent Application No. 202310377648.X, filed with the China National Intellectual Property Administration on March 30, 2023 and entitled "RADIO FREQUENCY SYSTEM AND ELECTRONIC DEVICE", which is incorporated herein by reference in its entirety.

## TECHNICAL FIELD

Embodiments of this application relate to the field of communication technologies, and in particular, to a radio frequency system and an electronic device.

## BACKGROUND

In 5-generation wireless systems (5th generation wireless systems, 5G), a higher carrier frequency (generally higher than 6 GHz) is employed compared with long term evolution (long term evolution, LTE) systems. Because the high carrier frequency, radio signals experience severer fading during spatial propagation, making the radio signals challenging to be detected at a receiver end. Therefore, a hybrid beamforming (hybrid beamforming, HBF) technology is used in 5G to achieve highly directional beams, to improve power of the radio signals in a transmit direction, increase coverage, and control antenna array costs.

However, in conventional technologies, when the hybrid beamforming technology is used in 5G to split one beam into a plurality of beams to cover a plurality of user equipments, an antenna gain is reduced and communication performance of each user equipment is diminished.

## SUMMARY

Embodiments of this application provide a radio frequency system and an electronic device, to resolve the following problem in conventional technologies: When a hybrid beamforming technology is used in 5G to split one beam into a plurality of beams to cover a plurality of user equipments, an antenna gain is reduced and communication performance of each user equipment is diminished.

To achieve the foregoing objectives, the following technical solutions are used in embodiments of this application.

According to a first aspect of embodiments of this application, a radio frequency system is provided. The radio frequency system includes a power division circuit and N paths, where N is a positive integer greater than or equal to 2. The power division circuit is configured to receive M radio frequency signals, and divide each of the M radio frequency signals into N original radio frequency sub-signals, where M is a positive integer greater than or equal to 2. Each path is configured to receive M original radio frequency sub-signals, and the M original radio frequency sub-signals include one of the N original radio frequency sub-signals into which each radio frequency signal is divided. Each path includes M amplification circuits and one antenna, where the M amplification circuits are configured to amplify power of the M original radio frequency sub-signals, to generate M amplified radio frequency sub-signals. The antenna is configured to receive the M amplified radio frequency sub-signals, and generate and send M radio signals based on the M amplified radio frequency sub-signals.

Optionally, the antenna may include a plurality of sub-antennas, or may be a multi-feed point antenna. The multi-feed point antenna may include a plurality of ports with isolation. This is not limited in embodiments of this application.

Based on this solution, first, each of the M radio frequency signals is divided into the N original radio frequency sub-signals by using the power division circuit, and then the M original radio frequency sub-signals are received through each path. The M original radio frequency sub-signals include one of the N original radio frequency sub-signals into which each radio frequency signal is divided. Finally, the M amplification circuits in each path amplify the power of the M original radio frequency sub-signals, to generate the M amplified radio frequency sub-signals. The antenna receives the M amplified radio frequency sub-signals, and generates and sends the M radio signals based on the M amplified radio frequency sub-signals. In this process, no power loss is generated, and power of the M radio signals is equal to power of the M amplified radio frequency sub-signals. Therefore, an antenna gain may be effectively increased, and communication performance of user equipment may be improved.

With reference to the first aspect, in a possible implementation, the power division circuit includes M input ends and M*N output ends, each path includes M input ends and M output ends, and the M*N output ends of the power division circuit are coupled to the M*N input ends of the N paths. Input ends of the M amplification circuits in each path are coupled to the M input ends of the path. The antenna in each path includes M input ends and M output ends, output ends of the M amplification circuits are coupled to the M input ends of the antenna, and the M output ends of the antenna form the M output ends of the path.

Based on this solution, first, each of the M radio frequency signals is divided into the N original radio frequency sub-signals by using the power division circuit, and then the M original radio frequency sub-signals are received through each path. The M original radio frequency sub-signals include one of the N original radio frequency sub-signals into which each radio frequency signal is divided. Finally, the M amplification circuits in each path amplify the power of the M original radio frequency sub-signals, to generate the M amplified radio frequency sub-signals. The antenna receives the M amplified radio frequency sub-signals, and generates and sends the M radio signals based on the M amplified radio frequency sub-signals. In this process, no power loss is generated, and the power of the M radio signals is equal to the power of the M amplified radio frequency sub-signals. Therefore, the antenna gain may be effectively increased, and the communication performance of the user equipment may be improved.

With reference to the first aspect, in a possible implementation, the M amplified radio frequency sub-signals include a first amplified radio frequency sub-signal and a second amplified radio frequency sub-signal, each path further includes a 90-degree bridge, and the antenna includes a first sub-antenna and a second sub-antenna. The 90-degree bridge is configured to receive the first amplified radio frequency sub-signal and the second amplified radio frequency sub-signal, and generate a third amplified radio frequency sub-signal and a fourth amplified radio frequency sub-signal based on the first amplified radio frequency sub-signal and the second amplified radio frequency sub-signal. Both the third amplified radio frequency sub-signal and the fourth amplified radio frequency sub-signal include half power of the first amplified radio frequency sub-signal and half power of the second amplified radio frequency sub-signal. The first sub-antenna is configured to generate and send a first radio signal based on the third amplified radio frequency sub-signal. The second sub-antenna is configured to generate and send a second radio signal based on the fourth amplified radio frequency sub-signal.

Based on this solution, the first amplified radio frequency sub-signal and the second amplified radio frequency sub-signal may be combined without loss by using the 90-degree bridge, to generate the third amplified radio frequency sub-signal and the fourth amplified radio frequency sub-signal. Then, the first sub-antenna sends the first radio signal based on the third amplified radio frequency sub-signal, and the second sub-antenna sends the second radio signal based on the fourth amplified radio frequency sub-signal, without generating a power loss. Therefore, the antenna gain may be effectively improved, and the communication performance of the user equipment may be improved. In addition, two input ends of the 90-degree bridge are isolated from each other, so that mutual impact between the first amplified radio frequency sub-signal and the second amplified radio frequency sub-signal may be avoided, thereby further improving the communication performance of the user equipment.

With reference to the first aspect, in a possible implementation, the antenna includes an antenna array, and the antenna array includes a plurality of antenna elements. The plurality of antenna elements are configured to receive the M amplified radio frequency sub-signals, and generate and send the M radio signals based on the M amplified radio frequency sub-signals.

Based on this solution, the antenna includes the antenna array, and the antenna array includes the plurality of antenna elements. The M radio signals are generated and sent based on the M amplified radio frequency sub-signals by using the plurality of antenna elements. No power loss is generated. Therefore, the antenna gain may be effectively improved, and the communication performance of the user equipment may be improved.

With reference to the first aspect, in a possible implementation, each antenna element includes a radiating patch, a dielectric substrate, a reflective ground plane, and K*Y feed posts, the radiating patch includes K polarizations, each polarization includes Y feed points, K is 1 or 2, and Y is a positive integer greater than or equal to 2. The dielectric substrate includes a first surface and a second surface that are opposite to each other, the radiating patch is disposed on the first surface of the dielectric substrate, and the reflective ground plane is disposed on the second surface of the dielectric substrate. One end of the K*Y feed posts passes through the dielectric substrate, and is coupled to the K*Y feed points in the radiating patch, and the other end of the K*Y feed posts passes through the reflective ground plane to form K*Y feed ports. A portion of each of the feed posts positioned between the dielectric substrate and the reflective ground plane is encircled by dielectric, with a metal baffle installed between two adjacent feed posts.

Based on this solution, the portion of each of the feed posts positioned between the dielectric substrate and the reflective ground plane is surrounded by the dielectric, with the metal baffle installed between two adjacent feed posts. A coupling path between the feed ports may be adjusted, and coupling energy between the ports may be eliminated by adjusting a thickness of the dielectric and a height of the metal baffle. In this way, isolation between the feed ports may be improved, and the communication performance of the user equipment may be improved. In addition, when each antenna element generates and sends the radio signal based on the amplified radio frequency sub-signal, no loss is generated. Therefore, the antenna gain may be effectively improved.

With reference to the first aspect, in a possible implementation, the K*Y feed ports are configured to receive K*Y amplified radio frequency sub-signals in the M amplified radio frequency sub-signals, and send the K*Y amplified radio frequency sub-signals to the K*Y feed points by using the K*Y feed posts. The K*Y feed points are configured to generate and send K*Y radio signals based on the K*Y amplified radio frequency sub-signals.

Based on this solution, the K*Y amplified radio frequency sub-signals in the M amplified radio frequency sub-signals are received by using the K*Y feed ports, and the K*Y amplified radio frequency sub-signals are sent to the K*Y feed points by using the K*Y feed posts. The K*Y feed points generate and send the K*Y radio signals based on the K*Y amplified radio frequency sub-signals. In this process, no power loss is generated. Therefore, the antenna gain may be effectively improved, and the communication performance of the user equipment may be improved.

With reference to the first aspect, in a possible implementation, a length of the radiating patch between two adjacent feed points in the K*Y feed points is less than λ/2.

Based on this solution, in the K*Y feed points of each antenna element, the length of the radiating patch between two adjacent feed points is set to be less than λ/2, and the two adjacent feed points share a radiating arm. In this way, a plate area occupied by each antenna element may be reduced, thereby reducing costs of the antenna array and costs of the radio frequency system.

With reference to the first aspect, in a possible implementation, the radiating patch between two adjacent feed points in the K*Y feed points is of a comb structure.

Based on this solution, the radiating patch between two adjacent feed points in the K*Y feed points of each antenna element is disposed as a comb structure. In this way, the plate area occupied by each antenna element may be further reduced, thereby reducing the costs of the antenna array and the costs of the radio frequency system.

With reference to the first aspect, in a possible implementation, the amplification circuit includes a power amplifier and/or a low noise amplifier.

Based on this solution, the amplification circuit includes the power amplifier and/or the low noise amplifier. The radio frequency system may be configured to transmit a radio signal, or may be configured to receive a radio signal.

With reference to the first aspect, in a possible implementation, each of the N paths further includes M phase shifters, input ends of the M phase shifters in each path are coupled to the M input ends of the path, and output ends of the M phase shifters are coupled to the input ends of the M amplification circuits.

Based on this solution, the M phase shifters are disposed in each of the N paths, and phase weighting processing is performed on the M original radio frequency sub-signals by using the M phase shifters. In this way, each path may generate a beam in a specified direction, thereby improving the antenna gain obtained by the user equipment and the communication performance of the user equipment.

According to a second aspect of embodiments of this application, an electronic device is provided. The electronic device includes a processor and a radio frequency system that is coupled to the processor. The radio frequency system is the radio frequency system according to any one of the first aspect or the possible implementations of the first aspect.

Optionally, the processor may be a central processing unit, or may be a microcontroller unit, or may be referred to as a single-chip microcomputer. This is not limited in embodiments of this application.

Optionally, a type of the electronic device may include: a base station, a terminal, or another network device; or some modules or units of a base station, a terminal, or a network device, or the like. This is not limited in embodiments of this application.

For descriptions of the second aspect in this application, reference may be made to the detailed descriptions of the first aspect. In addition, for beneficial effects of the second aspect, reference may be made to an analysis on the beneficial effects of the first aspect. Details are not described herein.

**BRIEF DESCRIPTION OF DRAWINGS**

FIG. 1 is a diagram of a structure of a base station that uses a hybrid beamforming architecture;
FIG. 2 is a diagram of a structure of a base station that uses a hybrid beamforming fully-connected architecture;
FIG. 3 is a diagram of a structure of a radio frequency system;
FIG. 4 is a diagram of a structure of another radio frequency system;
FIG. 5 is a diagram of a structure of a radio frequency system according to an embodiment of this application;
FIG. 6 is a diagram of a structure of another radio frequency system according to an embodiment of this application;
FIG. 7 is a diagram of a structure of an antenna array according to an embodiment of this application;
FIG. 8 is a diagram of an antenna beam pattern according to an embodiment of this application;
FIG. 9 is a diagram of a structure of an antenna element according to an embodiment of this application;
FIG. 10 is a diagram of a structure of another antenna element according to an embodiment of this application;
FIG. 11 is a diagram of a structure of still another radio frequency system according to an embodiment of this application;
FIG. 12 is a schematic flowchart of a radio frequency system control method according to an embodiment of this application; and
FIG. 13 is a diagram of a structure of an electronic device according to an embodiment of this application.

**DESCRIPTION OF EMBODIMENTS**

The making and use of the embodiments are discussed in detail below. It should be appreciated, however, that many applicable inventive concepts provided in this application may be implemented in a plurality of specific environments. The specific embodiments discussed are merely illustrative of specific ways to implement and use this specification and this technology, and do not limit the scope of this application.

Unless otherwise defined, all technical terms used herein have the same meaning as those commonly known to a person of ordinary skill in the art.

The circuits or other components may be described as or referred to as "configured to" perform one or more tasks. In this case, the term "configured to" is used for implying a structure by indicating that a circuit/component includes a structure (for example, a circuit system) that performs one or more tasks during operation. Therefore, even when a specified circuit/component is currently not operable (for example, not started), the circuit/component may also be referred to as being configured to perform the task. Circuits/components used in conjunction with the "configured to" phrase include hardware, for example, a circuit for performing an operation.

The following describes the technical solutions in embodiments of this application with reference to the accompanying drawings in embodiments of this application. In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural. In addition, in embodiments of this application, terms such as "first" and "second" do not limit a quantity or an execution sequence.

It should be noted that in this application, terms such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of a word such as "example" or "for example" is intended to present a relative concept in a specific manner.

Before embodiments of this application are described, technical terms and background technologies in this application are first described.

Beamforming (beamforming, BF): Also referred to as beam shaping or spatial filtering, it is a signal processing technology that uses a sensor array to send and receive signals directionally.

Signal to interference plus noise ratio (signal to interference plus noise ratio, SINR): a ratio of a strength of received wanted signals to a strength of received interference signals (noise and interference). It may be simply understood as a signal-to-noise ratio.

Multiple-input multiple-output (multi-input multi-output, MIMO): a technology that uses a plurality of antennas to transmit and receive signals in the wireless communication field.

Antenna gain: a ratio of a power density of signals generated by an actual antenna to a power density of signals generated by an ideal radiating element at a same point in space when input power is the same. It is used to quantitatively describe a degree to which an antenna radiates the input power in a centralized manner.

Digital pre-distortion (digital pre-distortion, DPD): A pre-distortion component is cascaded with an amplifier. A non-linear distortion function is built in a digital and digital baseband signal processing domain, and is equivalent to a quantity of distortions exhibited by the amplifier, but the functions are opposite. The two non-linear distortion functions are combined to implement a highly linear and non-distortion system.

Isolation: The isolation is defined as a ratio of power of local oscillator or radio frequency signals leaked to other ports to input power in decibels (decibels, dB). The isolation describes a capability of two paths of signals not to affect each other.

Pattern: a graph in which a radiated electromagnetic field of an antenna is distributed along angular coordinates at a fixed distance.

In 5G, a carrier frequency higher than that of a long term evolution system, for example, a frequency band such as 28 GHz, 38 GHz, or 72 GHz, is used to implement wireless communication with greater bandwidth and a higher transmission rate. Because the carrier frequency is relatively high, a radio signal undergoes severer fading in a spatial propagation process, and it is even difficult to detect the radio signal at a receive end. Therefore, in 5G, a beamforming technology is used to obtain a beam with good directionality, to increase power of the radio signal in a transmit direction and improve a signal to interference plus noise ratio at the receive end.

Further, in 5G, a hybrid beamforming (hybrid beamforming, HBF) technology is used to increase coverage and control antenna array costs. The hybrid beamforming technology includes analog beamforming (analogy beamforming, ABF) and digital beamforming (digital beamforming, DBF). Digital beamforming is similar to a multiple-input multiple-output technology in a long term evolution system, and analog beamforming adjusts a direction of an analog beam by changing a weight of each antenna element in an antenna array.

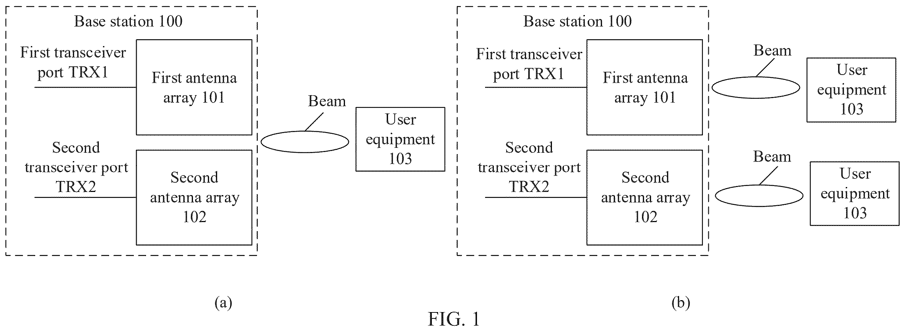

For example, (a) in FIG. 1 is a diagram of a structure of a base station 100 that uses a hybrid beamforming architecture. The base station 100 includes a first antenna array 101, a second antenna array 102, a first transceiver (transmit & receive, TRX) port TRX1, and a second transceiver port TRX2. The first antenna array 101 is coupled to the first transceiver port TRX1, and the second antenna array 102 is coupled to the second transceiver port TRX2. In this way, the first transceiver port TRX1 may send or receive a radio signal by using the first antenna array 101, and the second transceiver port TRX2 may send or receive a radio signal by using the second antenna array 102.

The base station 100 that uses the hybrid beamforming architecture may flexibly adapt to a single-user equipment access scenario and a multi-user equipment access scenario. The user equipment may be a terminal device. For example, as shown in (a) in FIG. 1, when a quantity of user equipments 103 in a cell covered by the base station 100 is relatively small, the first antenna array 101 and the second antenna array 102 may generate a high-gain beam, so that the user equipment 103 may obtain relatively good communication performance. As shown in (b) in FIG. 1, when a quantity of user equipments 103 in a cell covered by the base station 100 is relatively large, the first antenna array 101 and the second antenna array 102 may split one beam into a plurality of beams, to cover the plurality of user equipments 103.

However, when the first antenna array 101 and the second antenna array 102 split one beam into a plurality of beams, in comparison with a case in which the first antenna array 101 and the second antenna array 102 generate one beam, an antenna gain obtained by each user equipment 103 is reduced. For example, with reference to (b) in FIG. 1, a cell covered by the base station 100 includes two user equipments 103. When the first antenna array 101 and the second antenna array 102 split one beam into two beams, in comparison with the first antenna array 101 and the second antenna array 102 shown in (a) in FIG. 1 that generate one beam, an antenna gain obtained by each user equipment 103 is reduced by 3 dB, and consequently communication performance of each user equipment 103 is reduced.

To resolve the problem that the communication performance deteriorates during multi-user access in the hybrid beamforming architecture, a hybrid beamforming fully-connected architecture is used in 5G. A main difference between the hybrid beamforming fully-connected architecture and the hybrid beamforming architecture lies in that, a plurality of antenna arrays are cross-connected to a plurality of transceiver ports, and each transceiver port may simultaneously send or receive radio signals by using the plurality of antenna arrays, so that an antenna gain obtained by the user equipment may be increased.

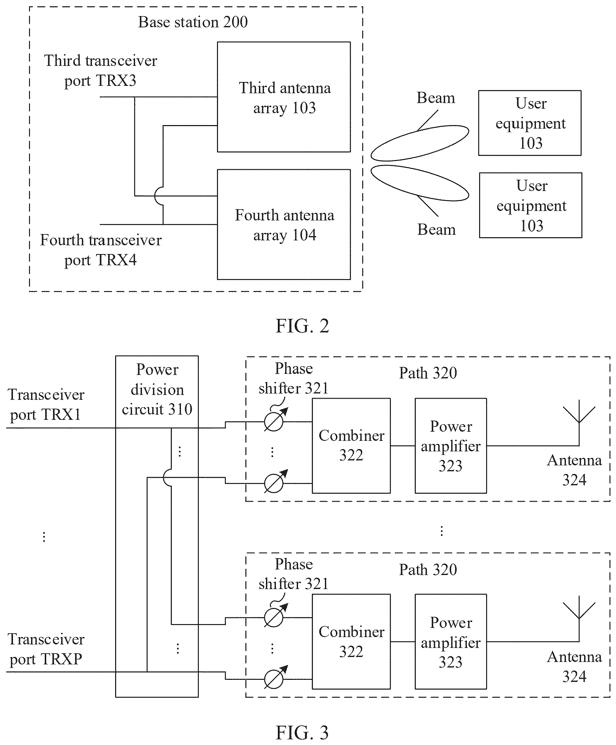

For example, FIG. 2 is a diagram of a structure of a base station 200 that uses a hybrid beamforming fully-connected architecture. The base station 200 includes a third antenna array 103, a fourth antenna array 104, a third transceiver port TRX3, and a fourth transceiver port TRX4. The third transceiver port TRX3 is coupled to both the third antenna array 103 and the fourth antenna array 104, and the fourth transceiver port TRX4 is also coupled to both the third antenna array 103 and the fourth antenna array 104. In this way, the third transceiver port TRX3 may simultaneously send or receive radio signals to or from a plurality of user equipments 103 by using the third antenna array 103 and the fourth antenna array 104; and the fourth transceiver port TRX4 may also simultaneously send or receive radio signals to or from a plurality of user equipments 103 by using the third antenna array 103 and the fourth antenna array 104, so that an antenna gain obtained by each user equipment 103 may be increased.

Specifically, the base station 200 that uses the hybrid beamforming fully-connected architecture may include a radio frequency system shown in FIG. 3. The radio frequency system includes P transceiver ports TRX1 to TRXP, a power division circuit 310, and Q paths 320, where both P and Q are integers greater than or equal to 2. The power division circuit 310 includes P input ends and P*Q output ends. Each path 320 includes P input ends and one output end. The P input ends of the power division circuit 310 are coupled to the P transceiver ports TRX1 to TRXP. The P*Q output ends of the power division circuit 310 are coupled to the P*Q input ends of the Q paths 320. Each path 320 includes P phase shifters 321, a combiner 322, a power amplifier (or a low noise amplifier) 323, and an antenna 324. In each path 320, input ends of the P phase shifters 321 are coupled to the P input ends of the path 320, output ends of the P phase shifters 321 are coupled to a plurality of input ends of the combiner 322, an output end of the combiner 322 is coupled to an input end of the power amplifier 323, an output end of the power amplifier 323 is coupled to the antenna 324, and the antenna 324 forms the output end of the path 320.

The power division circuit 310 is configured to receive P radio frequency signals from the P transceiver ports TRX1 to TRXP, and divide each radio frequency signal into Q original radio frequency sub-signals. Each path 320 is configured to receive P original radio frequency sub-signals. The P original radio frequency sub-signals include one of the Q radio frequency sub-signals into which each radio frequency signal is divided. In each path 320, the P phase shifters 321 are configured to perform phase weighting processing on the received P original radio frequency sub-signals. The combiner 322 is configured to combine the P phase-weighted original radio frequency sub-signals, to generate a mixed radio frequency signal. The power amplifier 323 is configured to amplify power of the mixed radio frequency signal, to generate an amplified radio frequency signal. The antenna 324 is configured to generate and send a radio signal based on the amplified radio frequency signal. When the radio frequency system is configured to receive a radio signal, a procedure is opposite to the foregoing procedure. Details are not described herein in embodiments of this application.

It can be understood that, the base station 200 that uses the hybrid beamforming fully-connected architecture may simultaneously transmit or receive radio signals through the radio frequency system shown in FIG. 3 by using a plurality of paths 320. Therefore, an antenna gain obtained by the user equipment may be improved, and communication performance of the user equipment may be improved.

However, in the foregoing radio frequency system, the power amplifier 323 in each path 320 is configured to amplify power of the mixed radio frequency signal. The power of the mixed radio frequency signal is relatively high, and this causes non-linear deterioration of the power amplifier 323. To ensure communication quality of each radio frequency signal received by the power division circuit 310, the power of the amplified radio frequency signal needs to be rolled back, causing a decrease in the antenna gain. For example, in a two-stream hybrid beamforming fully-connected scenario, theoretically the antenna gain may be increased by 3 dB. However, due to non-linearity of the power amplifier 323, the power of the amplified radio frequency signal needs to be rolled back. Consequently, the antenna gain is 1.x dB (where x is any value), and an effect of improving the antenna gain in the hybrid beamforming fully-connected architecture is relatively poor. Nonlinearity of the power amplifier 323 may be improved by using a digital pre-distortion technology. However, the solution is relatively complex, costs are relatively high, and consequently power consumption of the radio frequency system is relatively high.

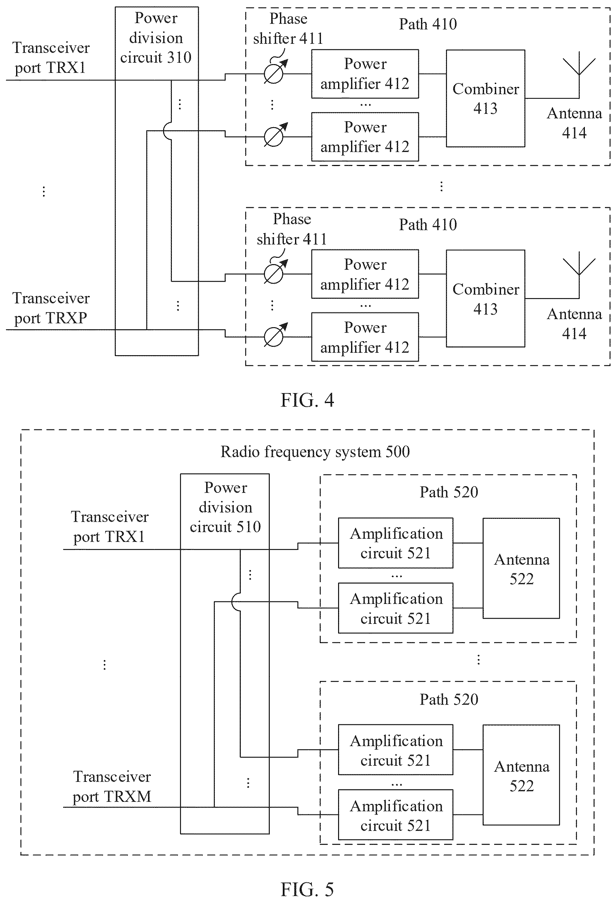

Alternatively, the base station 200 that uses the hybrid beamforming fully-connected architecture may include a radio frequency system shown in FIG. 4. A difference between this radio frequency system and the radio frequency system shown in FIG. 3 lies in that, this radio frequency system includes Q paths 410, each path 410 includes P input ends and one output end, and P*Q output ends of a power division circuit 310 are coupled to P*Q input ends of the Q paths 410. Each path 410 includes P phase shifters 411, P power amplifiers (or low noise amplifiers) 412, a combiner 413, and an antenna 414. In each path 410, input ends of the P phase shifters 411 are coupled to the P input ends of the path 410, output ends of the P phase shifters 411 are coupled to input ends of the P power amplifiers 412, output ends of the P power amplifiers 412 are coupled to a plurality of input ends of the combiner 413, an output end of the combiner 413 is coupled to the antenna 414, and the antenna 414 forms the output end of the path 410.

Each path 410 is configured to receive P original radio frequency sub-signals, where the P original radio frequency sub-signals include one of Q radio frequency sub-signals into which each radio frequency signal is divided. In each path 410, the P phase shifters 411 are configured to perform phase weighting processing on the P original radio frequency sub-signals. The P power amplifiers 412 are configured to perform power amplification on the P phase-weighted original radio frequency sub-signals, to generate P amplified radio frequency sub-signals. The combiner 413 is configured to combine the P amplified radio frequency sub-signals to generate a mixed radio frequency signal. The antenna 414 is configured to generate and send a radio signal based on the mixed radio frequency signal. When the radio frequency system is configured to receive a radio signal, a procedure is opposite to the foregoing procedure. Details are not described herein in embodiments of this application.

It can be understood that, the base station 200 that uses the hybrid beamforming fully-connected architecture may simultaneously transmit or receive radio signals through the radio frequency system shown in FIG. 4 by using a plurality of paths 410. Therefore, theoretically an antenna gain obtained by the user equipment may be improved, and communication performance of the user equipment may be improved.

However, because the P amplified radio frequency sub-signals are non-correlated signals, the combiner 413 in the radio frequency circuit needs to combine the P amplified radio frequency sub-signals by using a component having a port isolation function, for example, a Wilkinson power splitter. However, this type of component has an unavoidable 3 dB loss during combination, and cannot effectively improve the antenna gain. For example, in a two-stream hybrid beamforming fully-connected scenario, theoretically the antenna gain may be increased by 3 dB. However, because the combiner 413 has the 3 dB loss, an increase in the antenna gain in the hybrid beamforming fully-connected architecture is partially offset by the loss of the combiner 413. As a result, an effect of improving the antenna gain in the hybrid beamforming fully-connected architecture is relatively poor.

In conclusion, when the hybrid beamforming architecture or the hybrid beamforming fully-connected architecture is used in 5G to split one beam into a plurality of beams to cover a plurality of user equipments, the capability of improving the antenna gain is limited. Consequently, the communication performance of the user equipment is relatively poor. To resolve this problem, an embodiment of this application provides a radio frequency system, to improve the antenna gain and improve the communication performance of the user equipment.

FIG. 5 is a diagram of a structure of a radio frequency system 500 according to an embodiment of this application. The radio frequency system 500 includes a power division circuit 510 and N paths 520, where N is a positive integer greater than or equal to 2. A specific value of N is not limited in embodiments of this application. The power division circuit 510 includes M input ends and M*N output ends. The M input ends may be used as transceiver ports TRX1 to TRXM. M is a positive integer greater than or equal to 2. A specific value of M is not limited in embodiments of this application. Each path 520 includes M input ends and M output ends, and the M*N output ends of the power division circuit 510 are coupled to the M*N input ends of the N paths 520.

Specifically, each path 520 includes M amplification circuits 521 and one antenna 522. The antenna 522 in each path 520 includes M input ends and M output ends. Input ends of the M amplification circuits 521 are coupled to the M input ends of the path 520, output ends of the M amplification circuits 521 are coupled to the M input ends of the antenna 522, and the M output ends of the antenna 522 form the M output ends of the path 520.

The power division circuit 510 is configured to receive M radio frequency signals through the M transceiver ports TRX1 to TRXM, and divide each of the M radio frequency signals into N original radio frequency sub-signals. Each path 520 is configured to receive M original radio frequency sub-signals, where the M original radio frequency sub-signals include one of the N original radio frequency sub-signals into which each radio frequency signal is divided. Specifically, in each path 520, the M amplification circuits 521 are configured to amplify power of the M original radio frequency sub-signals, to generate M amplified radio frequency sub-signals. The antenna 522 is configured to receive the M amplified radio frequency sub-signals, and generate and send M radio signals based on the M amplified radio frequency sub-signals. It can be understood that, in comparison with the radio frequency system shown in FIG. 4, in this embodiment of this application, the antenna 522 receives the M amplified radio frequency sub-signals, and generates and sends the M radio signals based on the M amplified radio frequency sub-signals. There is no need to combine the M amplified radio frequency sub-signals by using the combiner 413. Therefore, power of the M radio signals is equal to power of the M amplified radio frequency sub-signals, and no power loss exists. In this way, an antenna gain may be effectively improved, and communication performance of user equipment may be improved.

In a possible embodiment, the power division circuit 510 may include M power splitters, and each power splitter is configured to split one radio frequency signal into N original radio frequency sub-signals. For a specific structure of the power division circuit 510, refer to conventional technologies. Details are not described in this embodiment of this application.

Optionally, the amplification circuit 521 may include a power amplifier and/or a low noise amplifier. This is not limited in embodiments of this application. When the amplification circuit 521 includes a power amplifier, the radio frequency system 500 may be configured to transmit a radio signal. When the amplification circuit 521 includes a low noise amplifier, the radio frequency system 500 may be configured to receive a radio signal. In this embodiment of this application, description is made by using an example in which the amplification circuit 521 includes a power amplifier and the radio frequency system 500 is configured to send a radio signal. A procedure in which the radio frequency system 500 is configured to receive a radio signal is opposite. Details are not described in this embodiment of this application.

Optionally, the antenna 522 may include a plurality of sub-antennas, or may be a multi-feed point antenna. The multi-feed point antenna may include a plurality of ports with isolation. This is not limited in embodiments of this application.

According to the radio frequency system 500 provided in this embodiment of this application, the power division circuit 510 first divides each of the M radio frequency signals into the N original radio frequency sub-signals, and then the M original radio frequency sub-signals are received through each path 520. The M original radio frequency sub-signals include one of the N original radio frequency sub-signals into which each radio frequency signal is divided. Finally, the M amplification circuits 521 in each path 520 amplify the power of the M original radio frequency sub-signals, to generate the M amplified radio frequency sub-signals. The antenna 522 receives the M amplified radio frequency sub-signals, and generates and sends the M radio signals based on the M amplified radio frequency sub-signals. In this process, no power loss is generated, and the power of the M radio signals is equal to the power of the M amplified radio frequency sub-signals. Therefore, the antenna gain may be effectively increased, and the communication performance of the user equipment may be improved.

In a possible embodiment, each path 520 may further include an M-in-M-out passive network, where the M-in-M-out passive network includes M input ends and M output ends, and isolation exists between the input ends. Specifically, the M input ends of the M-in-M-out passive network are coupled to the output ends of the M amplification circuits 521, and the M output ends of the M-in-M-out passive network are coupled to the M input ends of the antenna 522. The M-in-M-out passive network is configured to receive the M amplified radio frequency sub-signals, and combine the M amplified radio frequency sub-signals. The antenna 522 is configured to generate and send the M radio signals based on the M combined amplified radio frequency sub-signals.

For example, when a value of M is 2, the M-in-M-out passive network includes a 90-degree bridge. The 90-degree bridge may also be referred to as a branch line coupler or a branch line bridge.

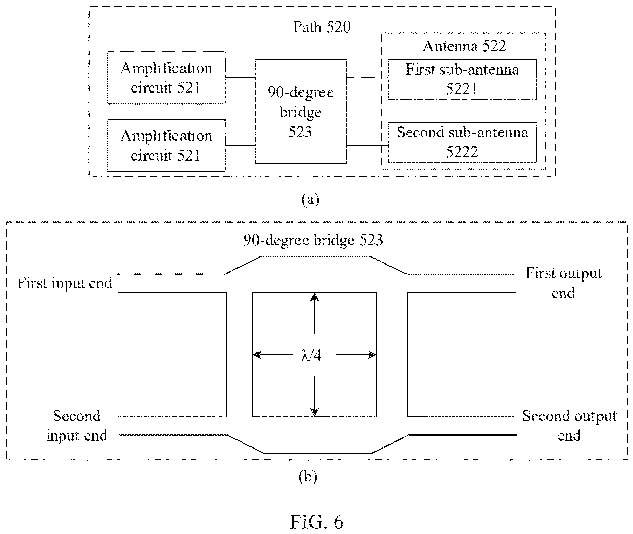

As shown in (a) in FIG. 6, in a possible embodiment, the M amplified radio frequency sub-signals include a first amplified radio frequency sub-signal and a second amplified radio frequency sub-signal, each path 520 further includes a 90-degree bridge 523, and the antenna 522 includes a first sub-antenna 5221 and a second sub-antenna 5222. Two input ends of the 90-degree bridge 523 are coupled to output ends of two amplification circuits 521, and two output ends of the 90-degree bridge 523 are coupled to an input end of the first sub-antenna 5221 and an input end of the second sub-antenna 5222.

The 90-degree bridge 523 is configured to receive the first amplified radio frequency sub-signal and the second amplified radio frequency sub-signal that are output by the two amplification circuits 521, and generate a third amplified radio frequency sub-signal and a fourth amplified radio frequency sub-signal based on the first amplified radio frequency sub-signal and the second amplified radio frequency sub-signal. Both the third amplified radio frequency sub-signal and the fourth amplified radio frequency sub-signal include half power of the first amplified radio frequency sub-signal and half power of the second amplified radio frequency sub-signal. The first sub-antenna 5221 is configured to generate and send a first radio signal based on the third amplified radio frequency sub-signal. The second sub-antenna 5222 is configured to generate and send a second radio signal based on the fourth amplified radio frequency sub-signal.

Specifically, as shown in FIG. 6, (b) is a diagram of a structure of the 90-degree bridge 523. The 90-degree bridge includes two input ends, which are a first input end and a second input end, and two output ends, which are a first output end and a second output end. A length of each bridge arm is λ/4, where λ represents a wavelength.

The first input end may receive the first amplified radio frequency sub-signal, transmit half power of the first amplified radio frequency sub-signal to the first output end, and transmit the other half power of the first amplified radio frequency sub-signal to the second output end. The second input end may receive the second amplified radio frequency sub-signal, transmit half power of the second amplified radio frequency sub-signal to the first output end, and transmit the other half power of the second amplified radio frequency sub-signal to the second output end. In this way, the first output end may output the third amplified radio frequency sub-signal, and the second output end may output the fourth amplified radio frequency sub-signal. Both the third amplified radio frequency sub-signal and the fourth amplified radio frequency sub-signal include half power of the first amplified radio frequency sub-signal and half power of the second amplified radio frequency sub-signal, so that the first amplified radio frequency sub-signal and the second amplified radio frequency sub-signal are combined without loss. Therefore, an antenna gain may be effectively improved, and communication performance of user equipment may be improved. In addition, the first input end and the second input end in the 90-degree bridge 523 are isolated from each other. Therefore, using the 90-degree bridge 523 may avoid mutual impact between the first amplified radio frequency sub-signal and the second amplified radio frequency sub-signal, thereby further improving the communication performance of the user equipment. For a specific feature of the 90-degree bridge 523, reference may be made to conventional technologies. Details are not described herein in this embodiment of this application.

In a possible embodiment, a specific quantity of the 90-degree bridges 523 included in each path 520 is the same as a specific value of M. The specific quantity of the 90-degree bridges 523 included in each path 520 is not limited in embodiments of this application.

For example, when the value of M is 2, each path 520 may include one 90-degree bridge 523. When the value of M is 4, each path 520 may include two 90-degree bridges 523.

In the radio frequency system 500 provided in this embodiment of this application, the 90-degree bridge 523 may combine the first amplified radio frequency sub-signal and the second amplified radio frequency sub-signal without loss, to generate the third amplified radio frequency sub-signal and the fourth amplified radio frequency sub-signal. Then, the first sub-antenna 5221 sends the first radio signal based on the third amplified radio frequency sub-signal, and the second sub-antenna 5222 sends the second radio signal based on the fourth amplified radio frequency sub-signal. The combiner 413 does not need to be used to combine the amplified radio frequency sub-signal and the second amplified radio frequency sub-signal, and no power loss is generated. Therefore, the antenna gain may be effectively improved, and the communication performance of the user equipment may be improved. In addition, the two input ends of the 90-degree bridge 523 are isolated from each other, so that mutual impact between the first amplified radio frequency sub-signal and the second amplified radio frequency sub-signal may be avoided, thereby further improving the communication performance of the user equipment.

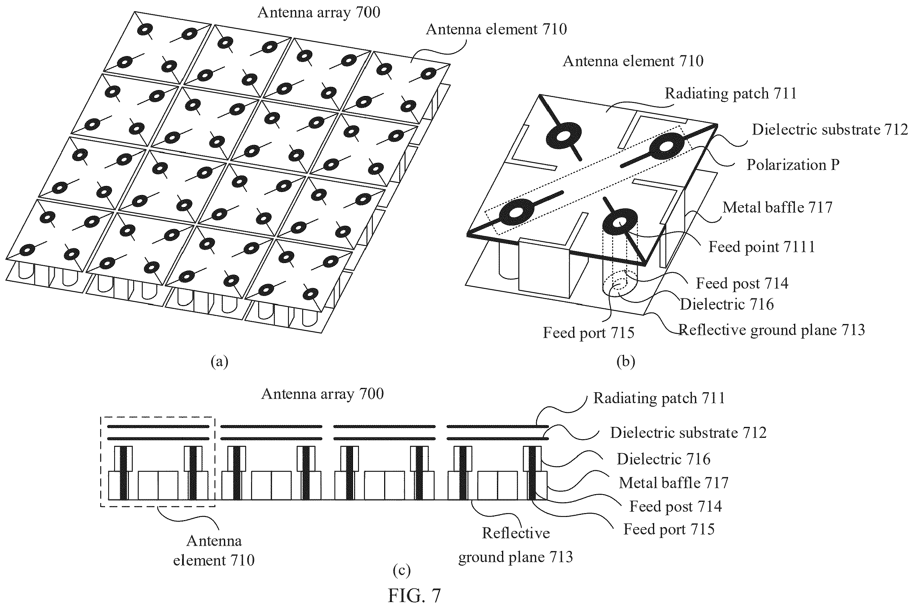

As shown in (a) in FIG. 7, in a possible embodiment, the antenna 522 includes an antenna array 700. The antenna array 700 includes a plurality of antenna elements 710, and the plurality of antenna elements 710 are coupled to the output ends of the M amplification circuits 521. A specific quantity of the antenna elements 710 included in the antenna array 700 is not limited in embodiments of this application. The plurality of antenna elements 710 are configured to receive the M amplified radio frequency sub-signals output by the M amplification circuits 521, and generate and send the M radio signals based on the M amplified radio frequency sub-signals.

Specifically, (b) in FIG. 7 is a diagram of a three-dimensional structure of each antenna element 710, and (c) in FIG. 7 is a diagram of a structure of the antenna array 700 after decomposition. Each antenna element 710 includes a radiating patch 711, a dielectric substrate 712, a reflective ground plane 713, and K*Y feed posts 714, where K is 1 or 2, and Y is a positive integer greater than or equal to 2. Specific values of K and Y are not limited in embodiments of this application. The radiating patch 711 in each antenna element 710 includes K polarizations P, and each polarization P includes Y feed points 7111 (which may also be referred to as feeding points). In this embodiment of this application, description is made by using an example in which a value of K is 2, a value of Y is 2, and each antenna element 710 includes 4 (2*2) feed points 7111. The dielectric substrate 712 includes a first surface and a second surface that are opposite to each other, the radiating patch 711 is disposed on the first surface of the dielectric substrate 712, and the reflective ground plane 713 is disposed on the second surface of the dielectric substrate 712. One end of the K*Y feed posts 714 penetrates through the dielectric substrate 712, and is coupled to the K*Y feed points 7111 in the radiating patch 711. The other end of the K*Y feed posts 714 penetrates through the reflective ground plane 713 to form K*Y feed ports 715. A portion of each of the feed posts 714 positioned between the dielectric substrate 712 and the reflective ground plane 713 is encircled by dielectric 716, with a metal baffle 717 installed between two adjacent feed posts 714.

In each antenna element 710, the K*Y feed ports 715 are configured to receive K*Y amplified radio frequency sub-signals in the M amplified radio frequency sub-signals, and send the K*Y amplified radio frequency sub-signals to the K*Y feed points 7111 via the K*Y feed posts 714. The K*Y feed points 7111 are configured to generate and send K*Y radio signals based on the K*Y amplified radio frequency sub-signals.

In a possible embodiment, a thickness of the dielectric 716 and a height of the metal baffle 717 in each antenna element 710 may be adjusted, to adjust a coupling path between the feed ports 715, and eliminate coupling energy between the ports. In this way, isolation between the feed ports 715 is improved, thereby avoiding a problem that a combined beam fails due to a poor directivity pattern preservation capability caused by excessively strong coupling between the feed ports 715.

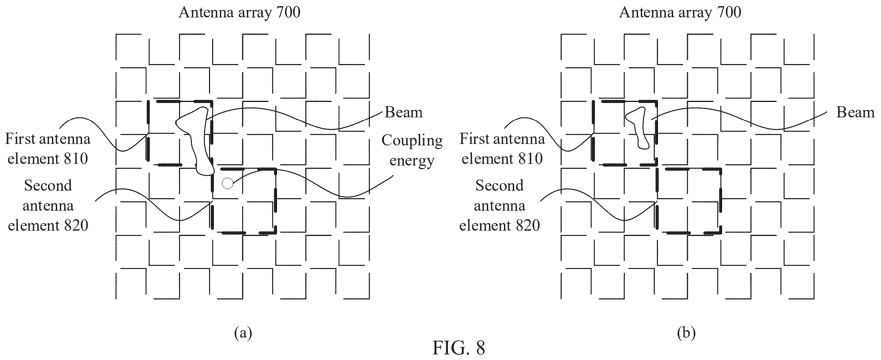

For example, as shown in (a) in FIG. 8, the antenna array 700 includes a first antenna element 810 and a second antenna element 820. When isolation between the first antenna element 810 and the second antenna element 820 is relatively low, and a feed port in the first antenna element 810 sends a radio signal, a beam generated by the first antenna element 810 and coupling energy generated by a feed port in the second antenna element 820 are shown in (a) in FIG. 8. The isolation between the first antenna element 810 and the second antenna element 820 may be improved by adjusting thicknesses of the dielectric 716 in the first antenna element 810 and that in the second antenna element 820 and the height of the metal baffle 717. In this case, a beam generated by the first antenna element 810 is shown in (b) in FIG. 8, and the feed port in the second antenna element 820 does not generate coupling energy.

Optionally, a specific value of the thickness of the dielectric 716 and a specific value of the height of the metal baffle 717 in each antenna element 710 may be determined through simulation or experiments. This is not limited in embodiments of this application.

According to the radio frequency system 500 provided in this embodiment of this application, a portion of each of the feed posts 714 positioned between the dielectric substrate 712 and the reflective ground plane 713 is encircled by dielectric 716, with a metal baffle 717 installed between the dielectric substrate 712 and the reflective ground plane 713, and the metal baffle 717 is disposed between two adjacent feed posts 714. The coupling path between the feed ports 715 may be adjusted by adjusting the thickness of the dielectric 716 and the height of the metal baffle 717, to eliminate the coupling energy between the feed ports, thereby improving isolation between the feed ports 715 and improving the communication performance of the user equipment. In addition, when each antenna element 710 generates and sends the radio signals based on the amplified radio frequency sub-signals, no loss is generated, therefore effectively improving the antenna gain.

In a possible embodiment, in the K*Y feed points 7111 of each antenna element 710, a length of the radiating patch 711 between two adjacent feed points 7111 is less than $\lambda/2$, where $\lambda$ represents a wavelength. In this case, the two adjacent feed points 7111 share a radiating arm, reducing a plate area occupied by each antenna element 710, and thereby reducing costs of the antenna array 700. The specific length of the radiating patch 711 between two adjacent feed points 7111 is not limited in embodiments of this application.

For example, the length of the radiating patch 711 between two adjacent feed points 7111 in each antenna element 710 may be $\lambda/4$.

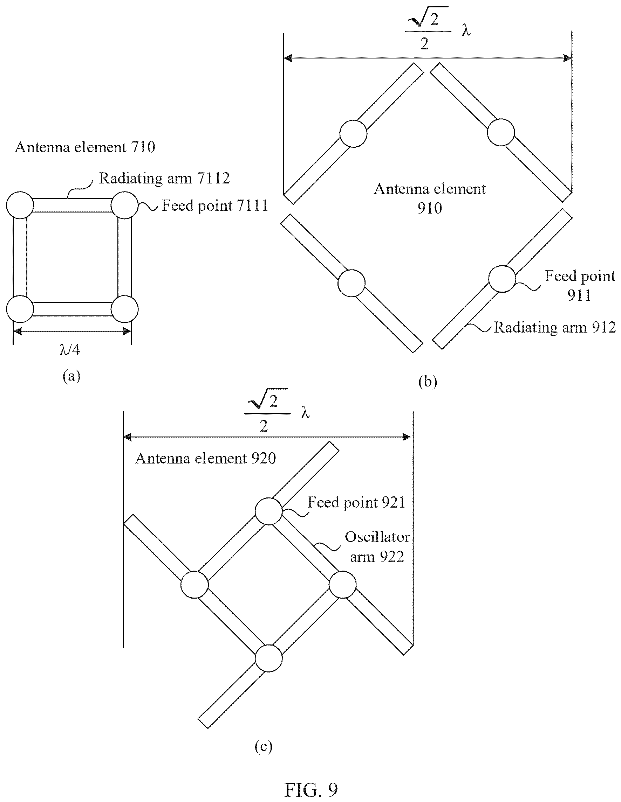

For example, the length of the radiating patch 711 between two adjacent feed points 7111 in each antenna element is $\lambda/4$. In this case, a structure of each antenna element 710 may be equivalent to a structure of the antenna element 710 shown in (a) in FIG. 9. The antenna element 710 includes four feed points 7111 and four radiating arms 7112. When the antenna element 710 is arranged to form the antenna array 700, an area that needs to be occupied is $(\lambda/4)^2$. As shown in FIG. 9, (b) is a diagram of a structure of another antenna element 910. The antenna element 910 includes four feed points 911 and eight radiating arms 912. When the antenna element 910 is arranged to form the antenna array, a side length is $\frac{\sqrt{2}}{2}\lambda$, and an area that needs to be occupied is $(\frac{\sqrt{2}}{2}\lambda)^2$.

As shown in FIG. 9, (c) is a diagram of a structure of another antenna element 920. The antenna element 920 includes four feed points 921 and eight radiating arms 922. When the antenna element 920 is arranged to form the antenna array, a side length is also $\frac{\sqrt{2}}{2}\lambda$, and an area that needs to be occupied is also $(\frac{\sqrt{2}}{2}\lambda)^2$. It can be understood that, when the antenna array 700 is formed by arranging the antenna elements 710, in comparison with the antenna array formed by arranging the antenna elements 910 or the antenna elements 920, a plate area occupied by the antenna array 700 may be effectively reduced, thereby effectively reducing costs of the antenna array 700. In this embodiment of this application, description is made by using an example in which the antenna array 700 is formed by arranging the antenna elements 710 shown in (a) in FIG. 9.

According to the radio frequency system 500 provided in this embodiment of this application, in the K*Y feed points 7111 of each antenna element 710, the length of the radiating patch 711 between two adjacent feed points 7111 is set to be less than $\lambda/2$, and the two adjacent feed points 7111 share the radiating arm. In this way, the plate area occupied by each antenna element 710 may be reduced, thereby reducing the costs of the antenna array 700 and the costs of the radio frequency system 500.

In a possible embodiment, in the K*Y feed points 7111 of each antenna element 710, the radiating patch 711 between two adjacent feed points 7111 is of a comb structure, so that a plate area occupied by each antenna element 710 may be further reduced, thereby reducing the costs of the antenna array 700.

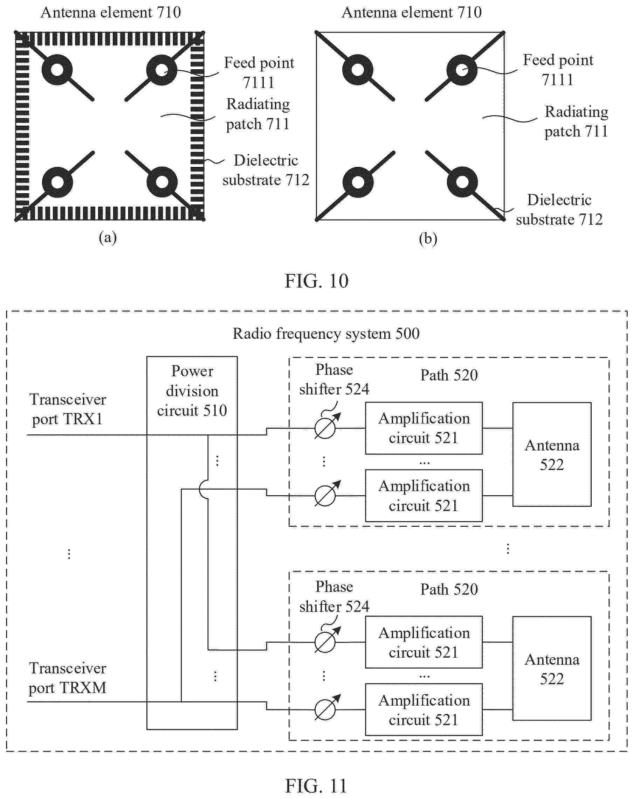

For example, as shown in (b) in FIG. 10, an edge of the antenna element 710 is a straight line, and an equivalent length of the radiating patch 711 serving as a radiating arm between two adjacent feed points 7111 is $\lambda/4$. As shown in (a) in FIG. 10, an edge of the radiating patch 711 between two adjacent feed points 7111 in the antenna element 710 is disposed as a comb structure. In this case, an equivalent length of the radiating patch 711 serving as a radiating arm is greater than $\lambda/4$. It can be understood that, the edge of the radiating patch 711 between two adjacent feed points 7111 in each antenna element 710 is disposed as the comb structure, so that a side length designed for the antenna element 710 may be reduced, thereby reducing the plate area occupied by each antenna element 710 and reducing costs of the antenna array 700.

Optionally, the comb structure may include a comb structure in a saw-tooth shape, a comb structure in a wave shape, or a comb structure in another shape. This is not limited in embodiments of this application.

According to the radio frequency system 500 provided in this embodiment of this application, in the K*Y feed points 7111 of each antenna element 710, the radiating patch 711 between two adjacent feed points 7111 is disposed as the comb structure. In this way, the plate area occupied by each antenna element 710 may be further reduced, thereby reducing the costs of the antenna array 700 and the costs of the radio frequency system 500.

As shown in FIG. 11, in a possible embodiment, each of the N paths 520 further includes M phase shifters 524, input ends of the M phase shifters 524 in each path 520 are coupled to the M input ends of the path 520, and output ends of the M phase shifters 524 are coupled to the input ends of the M amplification circuits 521. In each path 520, the M phase shifters 524 are configured to perform phase weighting processing on the M original radio frequency sub-signals, so that the path 520 may generate a beam in a specified direction. For a specific function of the phase shifter 524, reference may be made to conventional technologies. Details are not described herein in this embodiment of this application.

According to the radio frequency system 500 provided in this embodiment of this application, the M phase shifters 524 are disposed in each of the N paths 520, and phase weighting processing is performed on the M original radio frequency sub-signals by using the M phase shifters 524. In this way, each path 520 may generate the beam in the specified direction, thereby improving the antenna gain obtained by the user equipment and improving the communication performance of the user equipment.

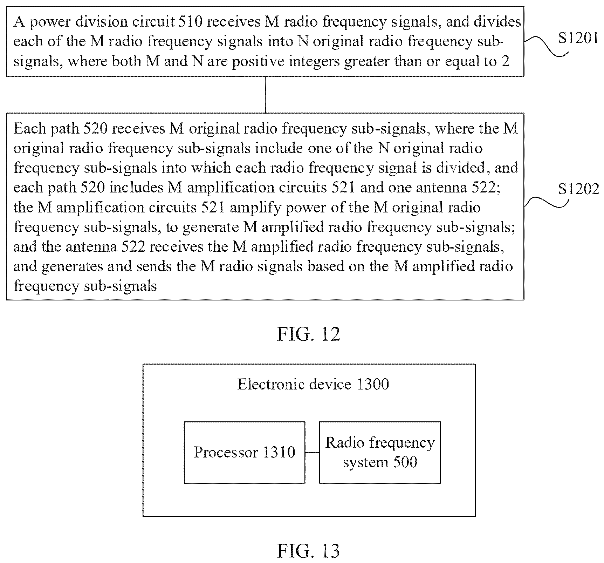

As shown in FIG. 12, an embodiment of this application further provides a radio frequency system control method. The method may be used to control the radio frequency system 500. The method includes steps S1201 to S1202.

S1201: A power division circuit 510 receives M radio frequency signals, and divides each of the M radio frequency signals into N original radio frequency sub-signals, where both M and N are positive integers greater than or equal to 2.

S1202: Each path 520 receives M original radio frequency sub-signals, where the M original radio frequency sub-signals include one of the N original radio frequency sub-signals into which each radio frequency signal is divided. Each path 520 includes M amplification circuits 521 and one antenna 522. The M amplification circuits 521 amplify power of the M original radio frequency sub-signals, to generate M amplified radio frequency sub-signals. The antenna 522 receives the M amplified radio frequency sub-signals, and generates and sends M radio signals based on the M amplified radio frequency sub-signals.

In a possible embodiment, the M amplified radio frequency sub-signals include a first amplified radio frequency sub-signal and a second amplified radio frequency sub-signal, each path 520 further includes a 90-degree bridge 523, and the antenna 522 includes a first sub-antenna 5221 and a second sub-antenna 5222. The foregoing step S1202 includes the following.

The 90-degree bridge 523 receives the first amplified radio frequency sub-signal and the second amplified radio frequency sub-signal, and generates a third amplified radio frequency sub-signal and a fourth amplified radio frequency sub-signal based on the first amplified radio frequency sub-signal and the second amplified radio frequency sub-signal, where both the third amplified radio frequency sub-signal and the fourth amplified radio frequency sub-signal include half power of the first amplified radio frequency sub-signal and half power of the second amplified radio frequency sub-signal. The first sub-antenna 5221 generates and sends a first radio signal based on the third amplified radio frequency sub-signal. The second sub-antenna 5222 generates and sends a second radio signal based on the fourth amplified radio frequency sub-signal.

In a possible embodiment, the antenna 522 includes an antenna array 700, and the antenna array 700 includes a plurality of antenna elements 710. The step S1202 includes: The plurality of antenna elements 710 receive the M amplified radio frequency sub-signals, and generate and send the M radio signals based on the M amplified radio frequency sub-signals.

According to the radio frequency system control method provided in this embodiment of this application, the power division circuit 510 first divides each of the M radio frequency signals into the N original radio frequency sub-signals, and then the M original radio frequency sub-signals are received through each path 520. The M original radio frequency sub-signals include one of the N original radio frequency sub-signals into which each radio frequency signal is divided. Finally, the M amplification circuits 521 in each path 520 amplify the power of the M original radio frequency sub-signals, to generate the M amplified radio frequency sub-signals. The antenna 522 receives the M amplified radio frequency sub-signals, and generates and sends the M radio signals based on the M amplified radio frequency sub-signals. In this process, no power loss is generated, and power of the M radio signals is equal to power of the M amplified radio frequency sub-signals. Therefore, an antenna gain may be effectively increased, and communication performance of user equipment may be improved.

As shown in FIG. 13, an embodiment of this application further provides an electronic device 1300. The electronic device 1300 includes a processor 1310 and a radio frequency system 500 that is coupled to the processor 1310. A structure of the radio frequency system 500 is the structure of the radio frequency system 500 shown in FIG. 5 to FIG. 7, FIG. 9, and FIG. 10.

Optionally, the processor 1310 may be a central processing unit (central processing unit, CPU), or may be a microcontroller unit (microcontroller unit, MCU), or may be referred to as a single-chip microcomputer, or another circuit having a signal processing function. This is not limited in embodiments of this application. The electronic device 1300 may include one or more processors.

Optionally, a type of the electronic device 1300 may include: a base station, a terminal, or another network device; or some modules or units of a base station, a terminal, or a network device, or the like. This is not limited in embodiments of this application.

An embodiment of this application further provides a computer readable storage medium. The computer readable storage medium stores computer executable instructions. When at least one processor of a device executes the computer executable instructions, a radio frequency system 500 performs the steps in the radio frequency system control method shown in FIG. 12.

An embodiment of this application further provides a computer program product. When at least one processor of a device runs the computer program product, the radio frequency system 500 performs the steps in the radio frequency system control method shown in FIG. 12.

The foregoing detailed description of the radio frequency system 500 and beneficial effect analysis may be correspondingly cited to the radio frequency system control method, the electronic device 1300, the computer readable storage medium, and the computer program product. Details are not described in embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A radio frequency system, wherein the radio frequency system comprises a power division circuit and N paths, and N is a positive integer greater than or equal to 2;

   the power division circuit is configured to receive M radio frequency signals, and divide each of the M radio frequency signals into N original radio frequency sub-signals, wherein M is a positive integer greater than or equal to 2;
   each path is configured to receive M original radio frequency sub-signals, wherein the M original radio frequency sub-signals comprise one of the N original radio frequency sub-signals into which each radio frequency signal is divided;
   each path comprises M amplification circuits and one antenna;
   the M amplification circuits are configured to amplify power of the M original radio frequency sub-signals, to generate M amplified radio frequency sub-signals; and
   the antenna is configured to receive the M amplified radio frequency sub-signals, and generate and send M radio signals based on the M amplified radio frequency sub-signals.

2. The system according to claim 1, wherein the power division circuit comprises M input ends and M*N output ends, each path comprises M input ends and M output ends, and the M*N output ends of the power division circuit are coupled to the M*N input ends of the N paths;

   input ends of the M amplification circuits in each path are coupled to the M input ends of the path; and
   the antenna in each path comprises M input ends and M output ends, output ends of the M amplification circuits are coupled to the M input ends of the antenna, and the M output ends of the antenna form the M output ends of the path.

3. The system according to claim 1 or 2, wherein the M amplified radio frequency sub-signals comprise a first amplified radio frequency sub-signal and a second amplified radio frequency sub-signal, each path further comprises a 90-degree bridge, and the antenna comprises a first sub-antenna and a second sub-antenna;

the 90-degree bridge is configured to receive the first amplified radio frequency sub-signal and the second amplified radio frequency sub-signal, and generate a third amplified radio frequency sub-signal and a fourth amplified radio frequency sub-signal based on the first amplified radio frequency sub-signal and the second amplified radio frequency sub-signal, wherein both the third amplified radio frequency sub-signal and the fourth amplified radio frequency sub-signal comprise half power of the first amplified radio frequency sub-signal and half power of the second amplified radio frequency sub-signal; the first sub-antenna is configured to generate and send a first radio signal based on the third amplified radio frequency sub-signal; and the second sub-antenna is configured to generate and send a second radio signal based on the fourth amplified radio frequency sub-signal.

4. The system according to claim 1 or 2, wherein the antenna comprises an antenna array, and the antenna array comprises a plurality of antenna elements; and
the plurality of antenna elements are configured to receive the M amplified radio frequency sub-signals, and generate and send the M radio signals based on the M amplified radio frequency sub-signals.

5. The system according to claim 4, wherein each antenna element comprises a radiating patch, a dielectric substrate, a reflective ground plane, and K*Y feed posts, the radiating patch comprises K polarizations, each polarization comprises Y feed points, K is 1 or 2, and Y is a positive integer greater than or equal to 2;

the dielectric substrate comprises a first surface and a second surface that are opposite to each other, the radiating patch is disposed on the first surface of the dielectric substrate, and the reflective ground plane is disposed on the second surface of the dielectric substrate; one end of the K*Y feed posts passes through the dielectric substrate and is coupled to the K*Y feed points in the radiating patch, and the other end of the K*Y feed posts passes through the reflective ground plane to form K*Y feed ports; and a portion of each of the feed posts positioned between the dielectric substrate and the reflective ground plane is encircled by dielectric, with a metal baffle installed between two adjacent feed posts.

6. The system according to claim 5, wherein the K*Y feed ports are configured to receive K*Y amplified radio frequency sub-signals in the M amplified radio frequency sub-signals, and send the K*Y amplified radio frequency sub-signals to the K*Y feed points by using the K*Y feed posts; and
the K*Y feed points are configured to generate and send K*Y radio signals based on the K*Y amplified radio frequency sub-signals.

7. The system according to claim 5 or 6, wherein a length of the radiating patch between two adjacent feed points in the K*Y feed points is less than $\lambda/2$.

8. The system according to any one of claims 5 to 7, wherein the radiating patch between two adjacent feed points in the K*Y feed points is of a comb structure.

9. The system according to any one of claims 1 to 8, wherein the amplification circuit comprises a power amplifier and/or a low noise amplifier.

10. The system according to any one of claims 1 to 9, wherein each of the N paths further comprises M phase shifters; and
input ends of the M phase shifters in each path are coupled to the M input ends of the path, and output ends of the M phase shifters are coupled to the input ends of the M amplification circuits.

11. An electronic device, wherein the electronic device comprises a processor and a radio frequency system that is coupled to the processor, and the radio frequency system is the radio frequency system according to any one of claims 1 to 10.

(a)                                                                                    (b)

FIG. 1

Base station 200

Third transceiver
port TRX3

Third antenna
array 103

Beam

User
equipment
103

Fourth transceiver
port TRX4

Fourth antenna
array 104

Beam

User
equipment
103

FIG. 2

Transceiver
port TRX1

Power
division
circuit 310

Phase
shifter 321

Path 320

Combiner
322

Power
amplifier
323

Antenna
324

Transceiver
port TRXP

Phase
shifter 321

Path 320

Combiner
322

Power
amplifier
323

Antenna
324

FIG. 3

FIG. 4

FIG. 5

Path 520

| Amplification circuit 521 | | 90-degree bridge 523 | | Antenna 522 | |
|---|---|---|---|---|---|
| | | | | First sub-antenna 5221 | |
| Amplification circuit 521 | | | | Second sub-antenna 5222 | |

(a)

90-degree bridge 523

First input end ——— ——— First output end

$\lambda/4$

Second input end ——— ——— Second output end

(b)

FIG. 6

Antenna array 700

Antenna element 710

Antenna element 710

Radiating patch 711

Dielectric substrate 712

Polarization P

Metal baffle 717

Feed point 7111

Feed post 714

Dielectric 716

Feed port 715

Reflective ground plane 713

(a)

(b)

Antenna array 700

Radiating patch 711

Dielectric substrate 712

Dielectric 716

Metal baffle 717

Feed post 714

Feed port 715

Antenna element 710

Reflective ground plane 713

(c)

FIG. 7

Antenna array 700

Antenna array 700

First antenna
element 810

Second
antenna
element 820

Beam

Coupling
energy

First antenna
element 810

Second
antenna
element 820

Beam

(a)

(b)

FIG. 8

Antenna element 710

Radiating arm 7112

Feed point 7111

λ/4

(a)

$$\frac{\sqrt{2}}{2} \lambda$$

Antenna element
910

Feed point
911

Radiating arm 912

(b)

$$\frac{\sqrt{2}}{2} \lambda$$

Antenna element 920

Feed point 921

Oscillator
arm 922

(c)

FIG. 9

Antenna element 710

Feed point
7111

Radiating
patch 711

Dielectric
substrate 712

Antenna element 710

Feed point
7111

Radiating
patch 711

Dielectric
substrate 712

(a)

(b)

FIG. 10

Radio frequency system 500

Transceiver
port TRX1

Power
division
circuit 510

Phase
shifter 524

Path 520

Amplification
circuit 521

...

Amplification
circuit 521

Antenna
522

Transceiver
port TRXM

Phase
shifter 524

Path 520

Amplification
circuit 521

...

Amplification
circuit 521

Antenna
522

FIG. 11

A power division circuit 510 receives M radio frequency signals, and divides each of the M radio frequency signals into N original radio frequency sub-signals, where both M and N are positive integers greater than or equal to 2 — S1201

Each path 520 receives M original radio frequency sub-signals, where the M original radio frequency sub-signals include one of the N original radio frequency sub-signals into which each radio frequency signal is divided, and each path 520 includes M amplification circuits 521 and one antenna 522; the M amplification circuits 521 amplify power of the M original radio frequency sub-signals, to generate M amplified radio frequency sub-signals; and the antenna 522 receives the M amplified radio frequency sub-signals, and generates and sends the M radio signals based on the M amplified radio frequency sub-signals — S1202

FIG. 12

Electronic device 1300

Processor 1310 — Radio frequency system 500

FIG. 13

## INTERNATIONAL SEARCH REPORT

| | |
|---|---|
| International application No. | |
| | **PCT/CN2024/082243** |

**A. CLASSIFICATION OF SUBJECT MATTER**

H04B 1/40(2015.01)i; H04B 7/0413(2017.01)i

According to International Patent Classification (IPC) or to both national classification and IPC

**B. FIELDS SEARCHED**

Minimum documentation searched (classification system followed by classification symbols)

IPC:H04B,H04L

Documentation searched other than minimum documentation to the extent that such documents are included in the fields searched

Electronic data base consulted during the international search (name of data base and, where practicable, search terms used)

CNTXT, ENTXT, ENTXTC, DWPI, CJFD, VEN: 射频, 功分, 通路, 通道, 放大, 天线, 功率, 电路, radio frequency, RF, power, division, path, channel, amplification, antenna, circuit

**C. DOCUMENTS CONSIDERED TO BE RELEVANT**

| Category* | Citation of document, with indication, where appropriate, of the relevant passages | Relevant to claim No. |
|---|---|---|
| X | CN 115632241 A (CHENGDU HUAXIN TIANWEI TECHNOLOGY CO., LTD.) 20 January 2023 (2023-01-20) description, paragraphs 47-73, and figures 1-8 | 1-11 |
| A | CN 105721000 A (SHENZHEN HUAXUN FANGZHOU MICROELECTRONIC SCIENCE & TECHNOLOGY CO., LTD. et al.) 29 June 2016 (2016-06-29) entire document | 1-11 |
| A | CN 106972881 A (SHANGHAI HUAWEI TECHNOLOGIES CO., LTD.) 21 July 2017 (2017-07-21) entire document | 1-11 |
| A | US 2019296802 A1 (METAWAVE CORP.) 26 September 2019 (2019-09-26) entire document | 1-11 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **31 May 2024** | **12 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/082243**

| Patent document cited in search report | | | Publication date (day/month/year) | Patent family member(s) | | | Publication date (day/month/year) |
|---|---|---|---|---|---|---|---|
| CN | 115632241 | A | 20 January 2023 | None | | | |
| CN | 105721000 | A | 29 June 2016 | None | | | |
| CN | 106972881 | A | 21 July 2017 | EP | 3576314 | A1 | 04 December 2019 |
| | | | | WO | 2018153321 | A1 | 30 August 2018 |
| | | | | JP | 2020511061 | A | 09 April 2020 |
| | | | | US | 2019386765 | A1 | 19 December 2019 |
| | | | | IN | 201937034174 | A | 22 November 2019 |
| US | 2019296802 | A1 | 26 September 2019 | US | 2022182108 | A1 | 09 June 2022 |

Form PCT/ISA/210 (patent family annex) (July 2022)

# EP 4 679 720 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310377648X